# FASCICULE DE BREVET EUROPEEN

(11) **EP 2 379 430 B1**
(45) Date de publication et mention de la délivrance du brevet: **07.11.2012**
(21) Numéro de dépôt: 09801515.9
(22) Date de dépôt: 09.12.2009
(51) Int. Cl.: A47B 49/00, B65G 35/08, B65G 17/32

(54) **CONVOYEUR POUR FLACONS**
PHIOLENFÖRDEREINRICHTUNG
VIAL CONVEYOR

(30) Priorité: 22.12.2008 FR 0858943
(43) Date de publication de la demande: 26.10.2011
(73) Titulaire: Vazeille, Joël, 75015 Paris (FR); Chaigne, Patrick, 94100 Sain-Maur Des Fossés (FR)
(72) Inventeur: Vazeille, Joël, 75015 Paris (FR); Chaigne, Patrick, 94100 Sain-Maur Des Fossés (FR)
(74) Mandataire: Boutin, Antoine
(86) Numéro de dépôt international: PCT/FR2009/052456
(87) Numéro de publication internationale: WO 2010/072938

(56) Documents cités:
- DE-U1- 20 209 307
- US-A- 5 024 318

## Description

La présente invention concerne les convoyeurs en circuit fermé destinés à recevoir des conteneurs tels que flacons, éprouvettes, tubes, pots, bouteilles, capsules etc. en verre ou tous autres matériaux. Par convention, ces conteneurs seront dénommés flacons dans la suite de cette description étant entendu que par flacon on désigne aussi bien le corps principal du récipient que son dispositif d'obturation (bouchon ou autre). Ces convoyeurs ont pour fonction de ranger en un minimum de place un maximum de flacons et de les présenter systématiquement orientés face à l'utilisateur à l'issu de leur déplacement à travers un cheminement préétabli et contrôlé. Ceci permet d'une part que l'étiquette soit systématiquement visible afin d'identifier aisément les contenus desdits flacons et d'autre part d'accéder directement à chacun d'entre eux, sans avoir à retirer préalablement ceux qui sont en face avant.

Lesdits convoyeurs peuvent être réalisés en matière plastique ou toute autre matière pouvant être moulée, par injection ou tout autre procédé, ou façonnée par usinage.

Lesdits convoyeurs peuvent être utilisés aussi bien dans un environnement domestique que professionnel et ceci dans le cadre de diverses applications telles que par exemple le stockage des épices, aromates, condiments, sauces, des articles de mercerie, de visserie, de papeterie, etc.

En milieu domestique, lesdits convoyeurs, suspendus ou posés, s'intègrent aisément et harmonieusement aux meubles et étagères de cuisine ou autres meubles de rangement.

Un convoyeur de ce type, destiné au stockage de produits d'épicerie, est décrit dans le brevet US 5 024 318, expiré le 18/03/2003 et décrivant un convoyeur selon le préambule de la révendication 1. Il consiste pour l'essentiel en un convoyeur à flacons composé d'un corps muni de colonnettes femelles destinées à recevoir les colonnettes mâles de fixation d'un plateau de cheminement, lui-même composé d'un plateau périphérique supportant le mécanisme d'entraînement et d'un plateau central maintenus équidistants et sur un même plan par lesdites colonnettes. La fente constituée par l'intervalle entre les deux plateaux forme une piste en boucle, piste le long de laquelle circulent des supports de flacons composés d'un galet d'entraînement, d'une platine elle-même munie d'une pièce de guidage et d'un téton d'orientation en sa partie supérieure et d'une douille en sa partie inférieure. Ledit téton d'orientation a pour fonction de maintenir constante l'orientation du support, et par conséquent celle de chaque flacon et de son étiquette, par rapport à la piste. Tous les supports sont en contact les uns avec les autres, de sorte que le déplacement d'un seul support provoque le déplacement simultané de tous les autres le long de la piste à la manière d'une noria. Un moteur électrique réversible actionne un train de pignons entraînant une roue à encoches semi-circulaires dont la rotation provoque le déplacement des supports.

Ce convoyeur présente cependant l'inconvénient de n'être conçu que pour recevoir des flacons de forme cylindrique parfaite et tous identiques entre eux, de sorte qu'il est impossible de l'utiliser directement avec les nombreux flacons de formes très variées adoptées notamment par les distributeurs d'épices et de condiments présents sur le marché. Aussi, l'utilisateur est-il obligé de transvaser les produits depuis les flacons dans lesquels il les a achetés dans les flacons livrés avec l'appareil et spécialement prévus pour lui. De plus, les supports des flacons ne sont pas conçus pour supporter le poids des flacons en verre généralement adoptés par les distributeurs d'épices.

L'invention a pour objet de remédier à ces inconvénients et à procurer un convoyeur de flacons qui puisse accepter une large variété de flacons du commerce incluant leurs bouchons ou moulins, de configurations externes et de poids différents, sans nécessiter le transvasement de leurs contenus dans des flacons spécifiques au convoyeur.

Selon l'invention, le convoyeur, du type constitué par un plateau muni d'une piste en boucle fermée le long de laquelle des flacons sont entraînés en continu dans des supports disposés librement en contact les uns avec les autres de manière à former le long de la piste un train continu, chaque support étant constitué par une platine horizontale à laquelle se raccorde une pluralité de lamelles verticales, formant une couronne, susceptibles de s'écarter élastiquement par rapport à l'axe de rotation de la platine, leurs faces internes étant destinées à maintenir le flacon par pincement périphérique après son insertion dans ladite couronne, caractérisé en ce que les faces internes et externes des lamelles extérieures et intérieures des supports de flacons sont plates à leur jonction avec la platine.

L'invention est encore remarquable par les caractéristiques ci-après :
- l'épaisseur des parties hautes des lamelles extérieures et intérieures des supports de flacons est diminuée à la jonction desdites lamelles avec la platine,
- la face externe des lamelles extérieures des supports de flacons comporte une jambe de force,
- les faces externes des lamelles extérieures des supports de flacons forment en partie supérieure un cône droit tronqué ouvert inversé et en partie basse une forme cylindrique ou un cône droit tronqué ouvert inversé,
- les jambes de force des lamelles extérieures des supports de flacons forment en partie haute, une figure cylindrique et en partie basse un cône droit tronqué ouvert inversé,
   la platine des supports de flacons est composée d'une jante extérieure reliée par des rayons à un moyeu comportant un axe de rotation.
- selon une caractéristique avantageuse de l'invention, la platine des supports de flacons comporte une couronne de butée entourant les lamelles verticales extérieures de la douille, limitant l'écartement élastique des lamelles vers l'extérieur. L'intervalle régulier entre la couronne et les dites lamelles conditionne la forme de la couronne à celle des lamelles et délimite le débattement de ces dernières.
- le dessous de la platine des supports de flacons comporte en outre une cavité délimitée par une couronne intérieure de maintien,
- la couronne intérieure de maintien des supports de flacons est constituée par des lamelles indépendantes implantées verticalement entre deux rayons et tangentes au bord extérieur du moyeu de la platine,
- les lamelles de la couronne intérieure de maintien des supports de flacons sont obliques et divergentes et comportent en partie basse un pan coupé orienté vers l'extérieur permettant d'accueillir avantageusement les moulins à épices pourvus d'une cuvette qui remplacent dans certains cas les bouchons,
- le dessous de la platine des supports de flacons est muni d'une couronne de butée de profondeur pour limiter l'enfoncement des flacons,
- la platine des supports de flacons peut être munie d'un téton d'orientation coopérant avec la piste pour conserver constante la position relative du flacon qu'il porte au cours de son déplacement le long de ladite piste,
- le téton d'orientation des supports de flacons présente un contour en forme de croissant construit à partir d'une figure de traçage en forme de cercle,
- le téton d'orientation des supports de flacons est fabriqué comme une pièce séparée, amovible par rapport à la platine grâce à son cavalier, muni d'ergots,
- le téton d'orientation des supports de flacons est constitué par une roulette tournant librement autour d'un axe,
- la pièce de guidage des supports de flacons le long de la piste est formée d'un axe de guidage creux intégré au galet d'entraînement, et ledit axe creux reçoit l'axe de rotation reliant la platine au galet d'entraînement,
- le convoyeur des supports de flacons comporte un bac à piles télescopique.

D'autres caractéristiques et avantages de l'invention ressortiront de la description qui suit d'un exemple de réalisation préférentiel non limitatif en relation avec les dessins schématiques annexés dans lesquels:
- La Figure1 est une vue d'ensemble en perspective de dessous d'un appareil conforme à l'invention fixé sous une étagère dans sa variante avec les flacons suspendus.
- la Figure 2 est une vue en élévation avec arrachement partiel d'un premier mode de réalisation simplifié d'un support de flacons muni de lamelles extérieures implantées verticalement.
- La Figure 3 est une vue en élévation avec arrachement partiel d'un deuxième mode de réalisation d'un support de flacons muni de lamelles extérieures implantées verticalement.
- La Figure 4 est une vue en plan de dessus avec arrachement partiel du plateau central et du plateau périphérique formant la piste de cheminement des flacons ainsi que du mécanisme d'entraînement.
- La Figure 5 est une vue en coupe verticale d'un appareil conforme à l'invention, selon la ligne a - a' de la Figure 4 montrant l'engagement de flacons différents dans des supports selon les Figures 2 et 3.
- La Figure 6 est une vue en coupe verticale de deux supports contigus de flacon selon la Figure 2.
- La Figure 7 est une vue en coupe verticale de deux supports contigus de flacons selon la Figure 3.
- La Figure 8 est une vue en plan de dessous de l'appareil montrant schématiquement les supports de flacons et leur cheminement, ainsi que l'emplacement du puits de réception du moteur et du bac à piles.
- La Figure 9 est une vue de dessus du bac à piles télescopique.
- La Figure 10 est une vue en coupe verticale du bac à piles de la Figure 9 et de son puits de réception.
- La Figure 11 est une vue en perspective de dessous d'un support de flacons selon la Figure 2.
- Les Fig.11a à Fig.11h sont des vues éclatées des différents éléments composant le support de flacons selon la Figure 2, respectivement :
   ● La Figure 11a est une vue en perspective de dessous de la platine dudit support avec sa jupe formant butée.
   ● La Figure 11b est une vue en plan de dessus de la platine dudit support avec son téton d'orientation incorporé à la platine.
   ● La Figure 11c est une vue analogue à la Figure 11b montrant un téton d'orientation amovible.
   ● La Figure 11d est une vue analogue à la Figure 11c montrant une autre forme de réalisation du téton d'orientation amovible rotatif.
   ● La Figure 11e est une vue en perspective de l'intérieur montrant la face interne des lamelles extérieures du support selon la Figure 2.
   ● La Figure 11f est une vue en perspective de l'extérieur montrant la face externe des lamelles extérieures du support selon la Figure 2 avec leur jambe de force.
   ● La Figure 11g est une vue en perspective de l'extérieur montrant la face externe des lamelles extérieures du support selon la Figure 2 sans leur jambe de force.
   ● La Figure 11h est une vue en perspective de l'extérieur des jambes de forces des lamelles extérieures montrées à la Figure 11f.

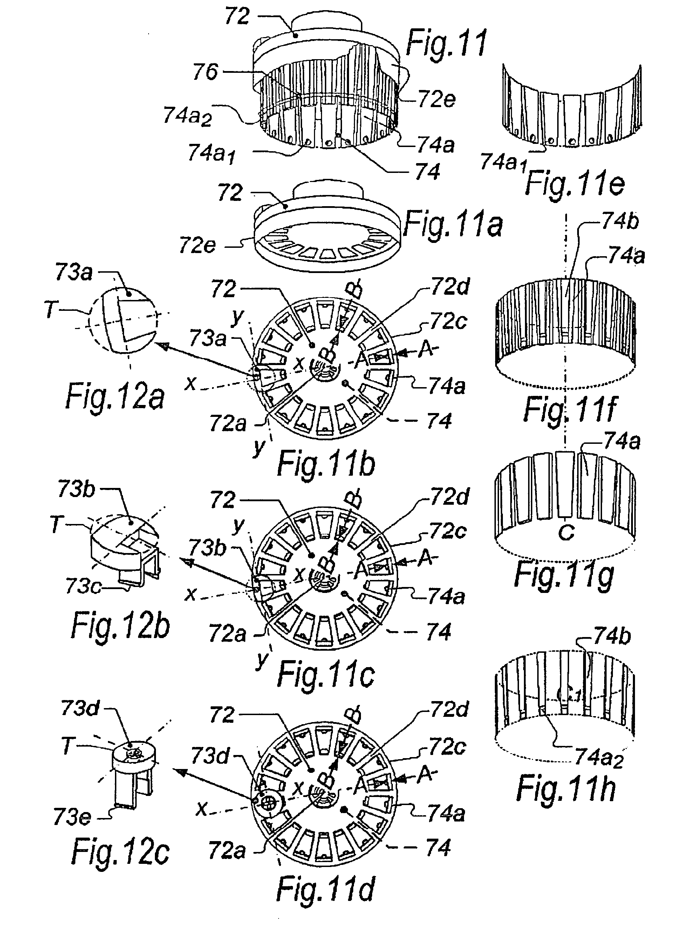

- La Figure 12a est une vue en plan de dessus agrandie du téton d'orientation du support de flacons de la Figure 11b.
- La Figure 12b est une vue en perspective du téton d'orientation amovible du support de flacons de la Figure 11c.
- La Figure 12c est une vue en perspective du téton d'orientation amovible rotatif du support de flacons de la Figure 11d.

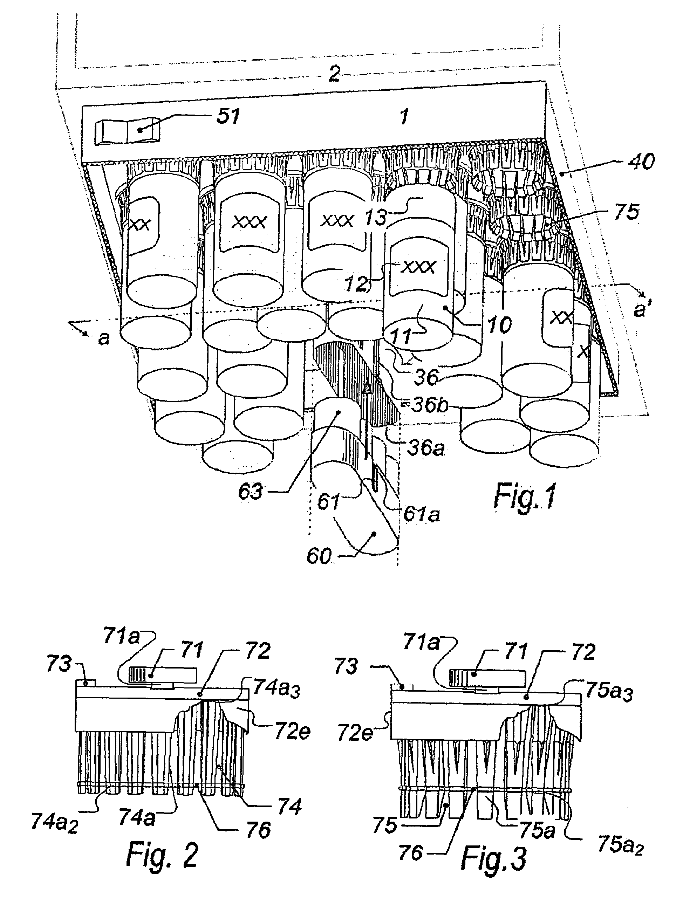

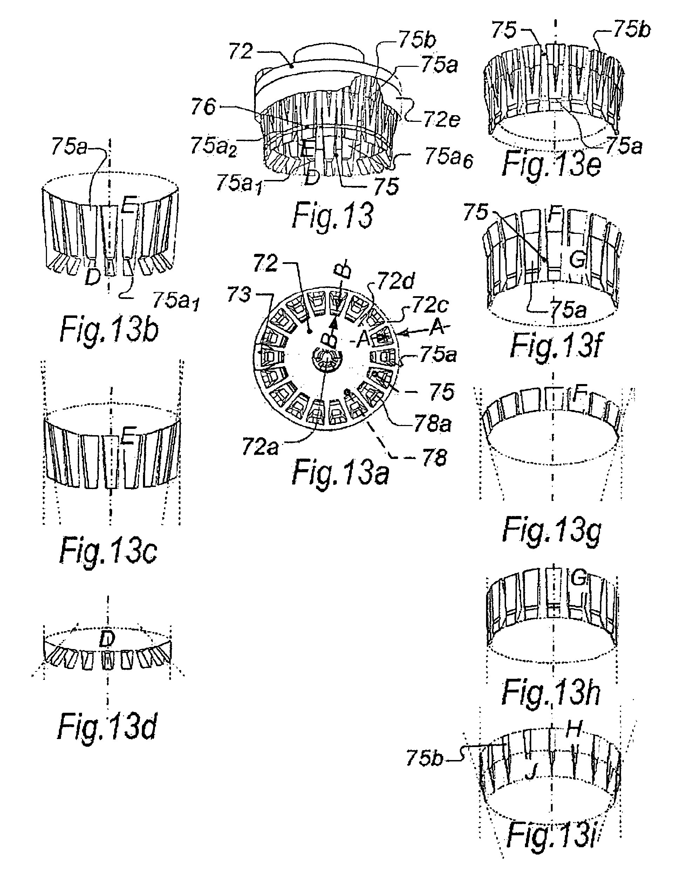

- La Figure 13 est une vue en perspective de dessous d'un support de flacons selon la Figure 3.
- Les Figures 13a à Fig.13i sont des vues éclatées des différents éléments composant le support de flacons selon la Figure 3, respectivement :
   ● La Figure 13a est une vue en plan de dessus de la platine dudit support avec son téton d'orientation incorporé à la platine.
   ● La Figure 13b est une vue en perspective de l'intérieur montrant la face interne des lamelles extérieures du support selon la Figure 3.
   ● La Figure 13c est une vue en perspective de l'extérieur montrant la face externe des lamelles extérieures du support selon la Figure 3 avec leurs jambes de force.
   ● La Figure 13d une vue en perspective de l'extérieur de ladite douille polyvalente montrant la face externe des lamelles extérieures de la Figure 13c sans leurs jambes de force.
   ● La Figure 13e est une vue en perspective de la partie haute externe des lamelles extérieures de la Figure 13d.
   ● La Figure 13f est une vue en perspective de la partie basse externe des lamelles extérieures de la Figure 13d.
   ● La Figure 13g est une vue en perspective de l'extérieur des jambes de forces des lamelles extérieures de la Figure 13c.

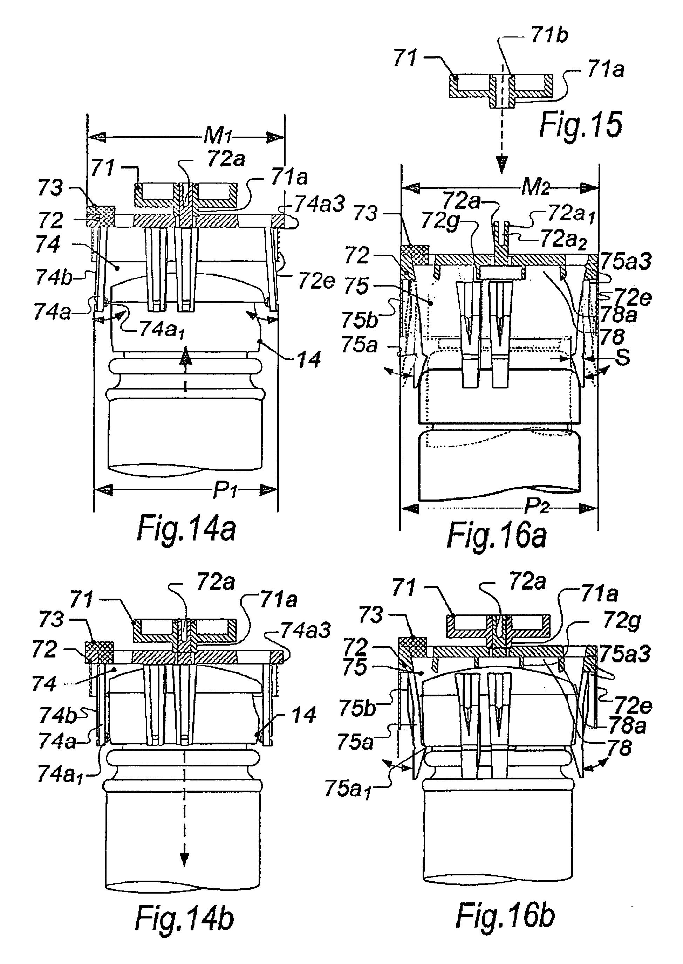

- La Figure 14a illustre le début d'insertion d'un flacon dans un support de flacons de la Figure 2.
- La Figure 14b illustre le maintien d'un flacon inséré dans un support selon la Figure 14a.
- La Figure. 15 est une vue en coupe verticale du galet d'entraînement.
- La Figure 16a est une vue en coupe verticale du support selon la Figure 3, illustrant le début d'insertion d'un flacon, le galet d'entraînement ayant été retiré de l'axe plongeur de la platine.
- La Figure 16b illustre le maintien d'un flacon inséré dans un support selon la Figure 16a.

Ainsi que montré en Figure 1, l'appareil 1 est conçu pour recevoir et maintenir une pluralité de flacons 10 disposés côte à côte de manière à permettre de stocker un maximum de flacons dans un minimum de volume et de les faire se déplacer le long d'une piste en boucle pour les amener en face avant où l'utilisateur peut accéder directement à chacun d'entre eux, sans avoir à manipuler ceux dont il n'a pas besoin.

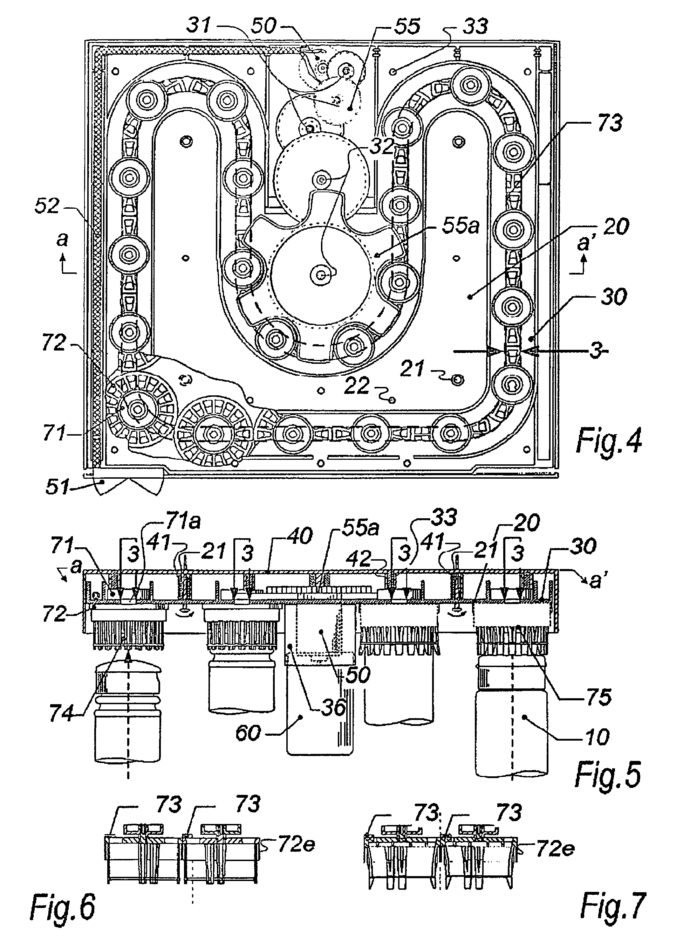

L'appareil 1 représenté dans cet exemple de réalisation est du type dans lequel les flacons sont suspendus. Il peut être fixé sous un meuble ou sous une étagère 2 par tout moyen approprié. Dans l'exemple représenté, l'appareil 1 est fixé sous l'étagère 2 par quatre vis traversant les colonnettes creuses 21 (voir les figures 4 et 5) et le capot 40. Le capot 40 supporte un plateau central 20 entouré d'un plateau périphérique 30. L'intervalle entre les deux plateaux constitue une piste en circuit fermé 3 ayant un tracé formant deux U imbriqués l'un dans l'autre et réunis entre eux par deux courbes en épingle à cheveux (figure 4). Le capot 40 est muni d'une part d'orifices circulaires dans lesquels viennent s'emboîter les axes solidaires pleins 31 du plateau périphérique 30, pour trois des pignons d'un train d'engrenages et, d'autre part, de colonnettes mâles qui s'insèrent dans les axes creux 32 des deux autres pignons pour assurer le parallélisme de l'ensemble du mécanisme d'entraînement. Enfin, le capot 40 est muni de colonnettes femelles 41, 42 destinées à recevoir les colonnettes mâles 21, 22 d'un plateau central 20, et des colonnettes mâles 33 d'un plateau périphérique 30 qui s'emboîtent dans le dit capot 40. Lesdites colonnettes permettent de solidariser et maintenir verrouillés les deux plateaux et le capot. Ledit plateau périphérique 30 entoure ledit plateau central 20 formant ainsi une piste en circuit fermé 3 d'une largeur d'environ 10mm dont la partie avant a la forme d'un U dont les deux branches se prolongent en partie arrière par deux U inversés dont les deux branches intérieures sont elles mêmes réunies par un U, dont la dimension est déterminée par le diamètre de la roue d'entraînement elle-même déterminée par le diamètre des flacons. Les supports de flacons qui circulent le long de la dite piste forment un train continu. Ils sont composés chacun : d'une part, d'un galet d'entraînement 71 qui glisse sur le chemin formé, par les bords de ladite piste et qui maintient et entraîne une platine 72 et sa douille associée 74 ou 75 qui elle-même maintient un flacon 10 ainsi que montré en Figure 4 et Figure 5, et d'autre part, d'un téton d'orientation 73 coopérant avec la piste 3 pour maintenir constante l'orientation dudit flacon tout au long de son déplacement le long de la piste 3.

Comme montré sur la Figure 1, chaque flacon 10 est constitué d'un corps 11 sur lequel est appliquée une étiquette informative ou un marquage 12. Le corps est 11 fermé par un bouchon 13 qui fait office de culot permettant de le suspendre en le maintenant dans la douille 74 ou 75 d'un support mobile de flacons comme montré aux Figures 1 et 5. Du fait que l'orientation des flacons par rapport à la piste est maintenue constante par les tétons d'orientation 73, l'étiquette 12 de chaque flacon, pour peu qu'elle ait été correctement placée lors de l'insertion des flacons dans les supports, reste en position de lecture directe par l'utilisateur lors du passage des flacons le long de la portion de piste située en face avant de l'appareil.

Dans le présent exemple de réalisation de l'invention, les supports de flacons sont au nombre de vingt-deux et le diamètre extérieur de leur platine 72 est de 53mm. Ils forment un train continu tout le long de la piste 3 où chaque platine est en contact, avec celle qu'elle pousse et celle qui la pousse. Ainsi, le déplacement d'un support provoque le déplacement de tous les autres le long de ladite piste.

Un dispositif commutateur/inverseur 51, fixé en face avant de l'appareil, est relié par un câblage approprié 52 à un petit moteur électrique de 6V DC réversible 50, emmanché en force dans un puits 35 fixé sous le plateau extérieur. Le moteur est alimenté par un jeu de quatre piles rondes 63 de 1,5V rechargeables ou non. Ledit moteur a une vitesse de rotation nominale d'environ 6000 t/mn. Il actionne par l'intermédiaire d'un train d'engrenages 55, à la vitesse de 20 t/mn, une roue à encoches 55a dont les évidements sont adaptés au diamètre des galets d'entraînement 71 des supports de flacons. Cette roue 55a, disposée sensiblement au centre du dispositif formé par la piste 3, entraîne les supports de flacons dont les galets d'entraînement 71 sont directement au contact, ce qui a pour effet, d'entraîner l'ensemble des supports qui les précèdent par simple poussée.

Sur les Figures 2 et 3 on voit que chaque support de flacons évoluant le long de la piste 3 est composé d'un galet d'entraînement 71, d'une platine 72 et d'une douille associée 74 ou 75, d'un téton d'orientation 73 et d'une jupe 72 e.

On va maintenant décrire en détail deux exemples de réalisation des supports de flacons selon l'invention en relation avec les Figures 11 à 13g. Comme on le voit sur les figures 11 et 13 ces deux modes de réalisation ont en commun le fait que chaque support est constitué par une platine cylindrique horizontale 72 à la périphérie de laquelle se raccorde une pluralité de lamelles verticales radiales 74a, 75a ,dites extérieures, susceptibles de s'écarter élastiquement par rapport à l'axe de rotation de la platine, chaque lamelle radiale étant munie sur sa face interne de moyens de retenue 74a1, 75a1 destinés à venir en appui avec la périphérie d'un flacon. De plus, une jupe périphérique 72e forme une butée limitant l'écartement élastique des lamelles extérieures vers l'extérieur. Enfin, la partie basse de la face externe des lamelles extérieures présente une rainure 74a2 ou 75a4 susceptible d'accueillir un joint torique ou tout autre moyen de cerclage élastique 76 destiné renforcer l'appui des lamelles extérieures sur la périphérie des flacons. On comprend que grâce au fait que la douille des supports de flacons est formée par des lamelles extérieures capables de se déformer individuellement, elle s'adapte ainsi à des flacons de formes et de dimensions très diverses.

Selon le premier exemple de réalisation représenté aux Figures 11b à 11h, on voit que la platine 72 des supports de flacons revêt la forme d'une roue composée d'une jante extérieure 72c reliée par des rayons 72d à un moyeu comportant un axe plongeur 72a. Ces rayons 72d sont délimités par des lumières trapézoïdales pratiquées dans la platine 72. Cette conception permet d'une part une réduction significative de la quantité de matière employée et autorise d'autre part, lorsque les supports sont fabriqués par injection de matière plastique, d'utiliser les poinçons correspondants du moule pour former en même temps les lamelles.

Le support de flacons montré aux Figures 11 à 11h est plus spécialement conçu pour les flacons du type ayant un capuchon de forme irrégulière présentant sur sa hauteur au moins une zone de dépression (référence 14 des Figures 14a et 14b). Dans cet exemple les lamelles extérieures 74a sont droites implantées verticalement, et munies sur leur face interne d'un ergot de retenue de flacon 74a₁. En position d'attente, lesdites lamelles extérieures 74a forment un cylindre (référence C de la Figure 11g), sous réserve de la dépouille nécessaire au démoulage.

De préférence, les lamelles extérieures 74a comportent, sur leur face externe, des jambes de forces 74b s'inscrivant dans une figure cylindrique (référence C1 de la Figure 11h), sous réserve de la dépouille nécessaire au démoulage.

Les Figures 14a et 14b illustrent le comportement des lamelles extérieures droites 74a qui, libres en leur partie basse, s'écartent élastiquement vers l'extérieur lors de l'introduction de bas en haut d'un flacon en pivotant autour d'un axe virtuel situé dans la zone de raccordement de chaque lamelle 74a avec la platine 72, pour en assurer ensuite le maintien, lorsque les ergots 74a₁ se logent naturellement, en raison de l'effet ressort de ces dernières, dans la première dépression 14 rencontrée du contour du flacon. Le diamètre extérieur de la partie basse de la douille (référence P1 de la Figure 14a), en fin de sa phase d'écartement, ne doit pas être supérieur au diamètre extérieur (référence M1 de la figure 14a) des platines, le principe de déplacement des supports de flacons impliquant que les platines demeurent en contact. Comme indiqué précédemment, la jupe 72e forme une butée contre l'écartement des lamelles extérieures 74a au-delà de ce diamètre, ce qui assure que la déformation des lamelles extérieures ne dépassera pas la limite élastique du matériau dans lequel elles sont fabriquées.

Sur les figures 11b à 11d on voit que les faces internes et externes des lamelles extérieures 74a sont plates à leur jonction (référence A) avec la platine 72, c'est-à-dire qu'elles n'épousent pas le rayon de courbure de la périphérie de la platine, ainsi on évite la rupture ou le non retour desdites lamelles qui se produirait si la forme de leurs parties hautes était autre que droite, par exemple en arc de cercle.

On voit en outre sur la Figure 2 que l'épaisseur des parties hautes 74a₃ des lamelles extérieures est diminuée par l'interruption des jambes de force 74b avant la jonction avec la platine 72 de manière à former une zone de moindre résistance, localisant la flexibilité desdites lamelles extérieures à cet endroit.

Selon le second mode de réalisation préféré représenté aux Figures 13 à 13g, 16a et 16b, les supports de flacons sont particulièrement adaptés pour accueillir les flacons du marché dont le capuchon ne présente pas de gorge accessible aux extrémités des lamelles extérieures verticales. Comme dans l'exemple de réalisation précédent, les supports de flacons ont la forme d'une roue composée d'une jante extérieure 72c reliée par des rayons 72d à un moyeu comportant un axe plongeur 72a. Ces rayons 72d sont délimités par des lumières trapézoïdales pratiquées dans la platine 72. Une jupe périphérique 72e forme une butée limitant l'écartement élastique des lamelles extérieures vers l'extérieur.

A cette jante 72c se raccordent des lamelles extérieures 75a, au nombre de dix-huit dans l'exemple représenté, implantées verticalement et indépendantes les unes des autres et qui forment une douille 75 de maintien de flacons. Le profil intérieur de chaque douille formée par la face interne desdites lamelles extérieures 75a, forme en partie basse un ergot de retenue 75a₁ comme visible sur la figure 16b. Cet ergot est suivi d'un pan incliné 75a₂ de l'intérieur vers l'extérieur. L'ensemble des pans inclinés des lamelles forme un entonnoir qui guide l'introduction des flacons et facilite l'expansion des lamelles.

On voit sur les Figures 13 et 13c à 13g que les faces externes des lamelles extérieures 75a délimitent, en partie supérieure, une figure en forme de cône droit tronqué ouvert inversé (référence F de la Figure 13e), suivie en partie basse d'une figure cylindrique (référence G de la Figure 13f) ou à défaut d'une figure en forme de cône droit tronqué ouvert inversé, sous réserve de la dépouille nécessaire au démoulage. Les lamelles extérieures 75a comportent, sur leurs faces externes, des jambes de force 75b s'inscrivant, en partie haute, dans une figure cylindrique (référence H de la Figure 13g), suivie en partie basse d'une figure en forme de cône droit tronqué ouvert inversé (référence J de la Figure 13g), sous réserve de la dépouille nécessaire au démoulage. Cette forme particulière permet un démoulage naturel de la pièce injectée.

Les Figures 16a et 16b illustrent le comportement des lamelles extérieures 75a qui, libres en leur partie basse, s'écartent élastiquement vers l'extérieur lors de l'introduction de bas en haut d'un flacon en pivotant autour d'un axe virtuel situé dans la zone de raccordement de chaque lamelle 75a avec la platine 72, pour en assurer ensuite le maintien par leur effet ressort naturel assisté par l'effet de retenue de l'ergot 75a1. Comme montré à la Figure 16a, le diamètre extérieur P2 de la partie basse de la douille en fin de sa phase d'expansion ne doit pas être supérieur au diamètre extérieur M2 des platines, le principe de déplacement des supports de flacons impliquant que les platines demeurent en contact entre elles.

Comme indiqué précédemment, la jupe 72e forme une butée contre l'écartement des lamelles extérieures 75a au-delà de ce diamètre, ce qui assure que la déformation des lamelles extérieures ne dépassera pas la limite élastique du matériau dans lequel elles sont fabriquées.

Selon une variante particulièrement avantageuse de réalisation illustrée sur la Figure 16a, la platine 72 du support est munie de moyens de coopération avec la cuvette interne des moulins à épices qui sont proposés sur le dessus des flacons en lieu et place des bouchons classiques. A cet effet, le dessous de la platine 72 comporte une cavité délimitée par une couronne de maintien 78. La couronne 78 est constituée par des lamelles intérieures indépendantes obliques et divergentes 78a comportant en partie basse un pan coupé orienté vers l'extérieur implantées verticalement entre deux rayons 72d et tangentes au bord extérieur du moyeu de la platine 72. La forme tronconique inversée de la partie basse guide l'introduction des flacons et facilite la rétraction des lamelles intérieures. La forme tronconique de la partie haute procure, quant à elle, l'effet ressort qui assure le maintien des flacons par pression des lamelles intérieures sur le pourtour intérieur du rebord de la cuvette des moulins. Selon l'invention, on voit en Figure 13a que les faces internes et externes de chacune des lamelles extérieures 75a et intérieures 78a composant lesdites douilles 75 et 78 sont plates à leur jonction (référence A et B) avec la platine72. La cavité que comporte le dessous de la platine abrite une seconde couronne 72g faisant office de butée de profondeur, de même hauteur mais implantée sous le moyeu. Les deux couronnes sont centrées par rapport à l'axe de la platine 72.

On va maintenant décrire en relation avec les Figures 11b à 11d et 12a à 12c trois modes de réalisation des tétons d'orientation 73.

Selon un premier mode de réalisation illustré par les Figures 11b et 12a, chaque support comporte sur la face supérieure de sa platine 72 un téton d'orientation en forme de croissant 73a venu de moulage et qui recouvre en partie deux rayons contigus 72d et la partie de la jante 72c qui les relie. Le croissant qui forme le téton d'orientation est construit à partir d'une figure de traçage en forme de cercle (référence T de la Figure 12a) dans laquelle il s'inscrit. Le centre de ce cercle est positionné à l'intersection de l'axe médian de deux rayons contigus (x) et de la tangente (y) au bord intérieur de la jante de la platine, comme cela est représenté sur la Figure 11b. Le croissant 73a est équidistant par rapport auxdits rayons contigus 72d, qu'il recouvre en partie. De ce fait, une portion du dit cercle de traçage se trouve hors du périmètre de la platine. Afin de maintenir l'intégrité de la forme circulaire de la platine, le corps du croissant est arasé à l'aplomb du bord de ladite platine. Ainsi, le téton d'orientation 73a présente un contour en forme de croissant qui procure un contact tangentiel avec les rives de la piste 3 contre lesquels il est en contact coulissant en position d'utilisation de l'appareil. Ceci contribue à faciliter le coulissement des tétons dans la piste 3.

Dans un deuxième mode de réalisation illustré par les Figures 11c et 12b, le téton d'orientation 73b, au lieu d'être venu de moulage avec le support 72 est fabriqué comme une pièce séparée, amovible par rapport à la platine grâce à son cavalier, muni d'ergots 73c. Le dit cavalier permet de l'insérer et de le maintenir équidistant entre deux rayons contigus 72d de la platine. Le croissant 73b qui forme le téton d'orientation est construit comme dans l'exemple de réalisation précédent à partir d'une figure de traçage en forme de cercle T dans laquelle il s'inscrit. Le centre de ce cercle est positionné à l'intersection de l'axe médian (x) de deux rayons contigus et de la tangente (y) au bord intérieur de la jante de la platine. Le croissant 73b est équidistant par rapport auxdits rayons contigus 72d, qu'il recouvre en partie. De ce fait une portion dudit cercle de traçage se trouve hors du périmètre de la platine. Afin de maintenir l'intégrité de la forme circulaire de ladite platine, le corps du croissant est arasé à l'aplomb du bord de la platine.

Ainsi, le dit téton peut être moulé dans une matière antifriction indépendante de celle de la platine et de la douille associée.

Selon un troisième mode de réalisation illustré par les Figures 11d et 12c, le téton d'orientation 73d, amovible par rapport à la platine grâce à un cavalier muni d'ergots 73e comme dans l'exemple de réalisation précédent, est constitué par une roulette tournant librement autour d'un axe porté par le cavalier. Le dit cavalier permet de l'insérer et de le maintenir équidistant entre deux rayons contigus 72d de la platine. Afin de maintenir l'intégrité de la forme circulaire de la platine, l'axe du téton rotatif est positionné sur l'axe médian (x) des deux rayons contigus de façon telle que son périmètre extérieur ne dépasse pas l'aplomb du périmètre extérieur de la platine.

Il peut donc également être moulé dans une matière antifriction indépendante de celle de la platine et de la douille associée.

Bien que ces trois modes de réalisation du téton d'orientation aient été décrits en relation avec le mode de réalisation du support selon la Figure 2, ils s'appliquent également au mode de réalisation du support selon la Figure 3.

On va maintenant décrire en relation avec les Figures 14a, 14b, 15, 16a et 16b le mode de réalisation préféré du montage d'un galet d'entraînement 71 sur un support de flacons 72. Il permet de réaliser la pièce de guidage des supports le long de la piste 3 dans un matériau antifriction différent du matériau dans lequel les supports sont réalisés, afin de favoriser un coulissement sans heurt desdits supports.

Ainsi que montré aux Figures 15, 16a et 16b, le moyeu de la platine 72 porte sur sa face externe un axe de rotation 72a qui comporte une fente verticale 72a₂ supérieure ou égale à deux fois la largeur des ergots 72a₁ permettant l'amplitude de mouvement nécessaire pour l'encliquetage desdits ergots dans la cuvette circulaire 71b du galet d'entraînement 71 lors de son assemblage par pression avec la platine 72.

Comme montré aux Figures 14a , 15 et 16a, la pièce de guidage des supports de flacons, le long de la piste 3 est formée d'un axe de guidage creux 71a intégré au galet d'entraînement 71. Cet axe creux reçoit l'axe de rotation 72a reliant la platine 72 au galet d'entraînement 71 pour former le support de flacons.

Selon une disposition avantageuse, en vue de réduire les coûts du conditionnement, du stockage et de l'acheminement des appareils, les inventeurs ont conçu un bac à piles télescopique permettant de réduire de 75% l'encombrement de l'appareil en position de transport (sans les piles) par rapport à un bac à piles traditionnel.

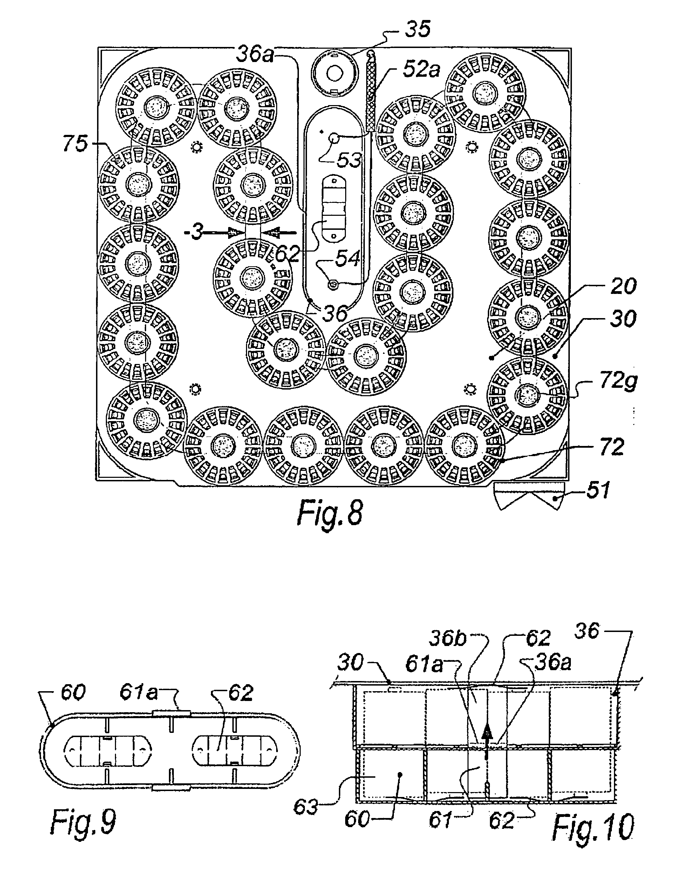

Comme illustré sur les Figures 1, 5, 8, 9 et 10, le bac à piles 60 du dispositif est muni de deux pattes latérales 61 dont les extrémités comportent chacune un taquet de verrouillage 61 a. Ledit bac à piles vient s'emboîter dans un puits de réception 36, partie intégrante du plateau périphérique 30. Ledit puits comporte latéralement de part et d'autre des épaulements 36a permettant le verrouillage desdits taquets 61a, lorsque ledit bac 60 est garni de piles en mode de fonctionnement. Le puits de réception 36 comporte en outre deux évidements latéraux 36b pour permettre le passage des taquets 61a lors de la rétractation du bac lorsque l'appareil sans ses piles 63 est introduit dans un emballage compact sans calage.

Comme on 1c voit sur les Figures 1, 8, 9 et 10, le bac à piles est implanté dans l'espace disponible sous l'appareil. La liaison électrique en série est assurée entre les piles par une lamelle métallique 62 implantée au fond du puits de réception 36 accueillant le bac à piles rétractable et par deux autres lamelles métalliques 62 implantées au fond dudit bac, le tout étant relié au commutateur/inverseur 51 par un fil à deux conducteurs 52a connectés aux pôles positif 53 et négatif 54 desdites piles.

Dans les exemples de réalisation décrits ci-dessus la douille et sa platine sont de forme circulaire. Cette forme n'est pas limitative la douille et/ou la platine pouvant prendre toute autre forme appropriée (ovale, polygonale, etc.) sans sortir du cadre de l'invention.

## Revendications

1. Convoyeur, du type constitué par un plateau (20) muni d'une piste en boucle fermée (3) le long de laquelle des flacons (10) sont entraînés en continu dans des supports disposés librement en contact les uns avec les autres de manière à former le long de la piste (3) un train continu, chaque support étant constitué par une platine (72) horizontale à laquelle se raccorde une pluralité de lamelles verticales (74a, 75a), formant une couronne, susceptibles de s'écarter élastiquement par rapport à l'axe de rotation de la platine, leurs faces internes étant destinées à maintenir un flacon (10) par pincement périphérique, **caractérisé en ce que** les faces internes et externes des lamelles (74a), (75a) des supports de flacons sont plates à leur jonction (références A) avec la platine.

2. Convoyeur selon la revendication 1 **caractérisé en ce que** l'épaisseur des parties hautes (74a3) et (75a3) des lamelles (74a) et (75a) des supports de flacons est diminuée à la jonction desdites lamelles (74a3) (75a3) et (78a) avec la platine (72).

3. Convoyeur selon la revendication 1 ou 2 **caractérisé en ce que** la face externe des lamelles (74a, 75a) des supports de flacons comporte une jambe de force (74b, 75b).

4. Convoyeur selon l'une quelconque des revendications 1 à 3 dans lequel la face interne des lamelles (75a) des supports de flacons comporte un ergot de retenue (75a1) des flacons, **caractérisé en ce que** ledit ergot est suivi d'un pan incliné (75a2) de l'intérieur vers l'extérieur, l'ensemble des pans inclinés des lamelles formant un entonnoir qui guide l'introduction des flacons et facilite l'expansion des lamelles.

5. Convoyeur selon la revendication 3 ou 4 **caractérisé en ce que** les jambes de force (75b) des lamelles (75a) des supports de flacons forment en partie haute (H) une figure cylindrique et en partie basse (J) un cône droit tronqué ouvert inversé.

6. Convoyeur selon l'une quelconque des revendications 1 à 5 **caractérisé en ce que** la platine (72) des supports de flacons est composée d'une jante extérieure (72c) reliée par des rayons (72d) à un moyeu comportant un axe de rotation (72a).

7. Convoyeur selon la revendication 1 **caractérisé en ce que** la platine (72) des supports de flacons comporte une couronne de butée (72e) entourant les lamelles verticales (74a, 75a) du support, limitant l'écartement élastique des lamelles vers l'extérieur.

8. Convoyeur selon l'une quelconque des revendications 1 à 7 **caractérisé en ce que** le dessous de la platine (72) des supports de flacons comporte en outre une cavité délimitée par une couronne intérieure de maintien (78).

9. Convoyeur selon la revendication 8 **caractérisé en ce que** la couronne (78) intérieure de maintien des supports de flacons est constituée par des lamelles indépendantes (78a) implantées verticalement entre deux rayons (72d) et tangentes au bord extérieur du moyeu de la platine (72).

10. Convoyeur selon la revendication 9 **caractérisé en ce que** les lamelles de la couronne intérieure de maintien (78) des supports de flacons sont obliques et divergentes et comportent en partie basse un pan coupé orienté vers l'extérieur.

11. Convoyeur selon l'une quelconque des revendications 1 à 10 **caractérisé en ce que** le dessous de la platine des supports de flacons est muni d'une couronne de butée (72g) de profondeur pour limiter l'enfoncement des flacons.

12. Convoyeur selon l'une quelconque des revendications 1 à 11 **caractérisé en ce que** chaque support est muni d'un téton d'orientation (73a) des supports de flacons présentant un contour en forme de croissant construit à partir d'une figure de traçage en forme de cercle (T).

13. Convoyeur selon la revendication 12 **caractérisé en ce que** chaque support est muni d'un téton d'orientation (73b) des supports de flacons qui est fabriqué comme une pièce séparée, amovible par rapport à la platine grâce à son cavalier, muni d'ergots (73c).

14. Convoyeur selon la revendication 12 **caractérisé en ce que** chaque support est muni d'un téton d'orientation (73b) des supports constitué par une roulette tournant librement autour d'un axe.

15. Convoyeur selon l'une quelconque des revendications 1 à 14 **caractérisé en ce que** la pièce de guidage des supports de flacons, le long de la piste (3) est formée d'un axe de guidage creux (71a) intégré au galet d'entraînement 71, et **en ce que** ledit axe creux (71a) reçoit l'axe de rotation (72a) reliant la platine (72) au galet d'entraînement (71).

16. Convoyeur selon l'une quelconque des revendications 1 à 15 **caractérisé en ce qu'**il comporte un bac à piles (60) télescopique.

## Claims

1. A conveyor consisting of a plate (20) with a closed-loop track (3) along which the vials (10) are driven in a continuous manner in holders arranged so as to be in free contact with each other in order to form a continuous stream along said track (3), each holder comprising a horizontal platen (72) to which is connected a plurality of vertical blades (74a, 75a) forming a ring and capable of elastically moving away from the rotational axis of the platen, the inner surfaces thereof being intended for bearing against the periphery of a vial (10), **characterized in that** the inner and outer surfaces of the blades (74a), (75a) of the vial holders are flat at the junction thereof (references A) with the platen.

2. The conveyor according to claim 1, **characterized in that** the thickness of the upper portions (74a3) and (75a3) of the blades (74a) and (75a) of the vial holders is smaller at the junction of said blades (74a3) (75a3) and (78a) with the platen (72).

3. The conveyor according to claim 1 or 2, **characterized in that** the outer surface of the blades (74a, 75a) of the vial holders comprises a brace (74b, 75b).

4. The conveyor according to any one of claims 1 to 3, wherein the inner surface of the blades (75a) of the vial holders comprises a retaining cam (75a1) for the vials, **characterized in that** said cam is followed by a face (75a2) inclined from the inside toward the outside, all of the inclined faces of the blades forming a funnel that guides the introduction of the vials and facilitates the expansion of the blades.

5. The conveyor according to claim 3 or 4, **characterized in that** the braces (75b) of the blades (75a) of the vial holders form a cylindrical figure in the upper portion (H) and an inverted open truncated cone in the lower portion (J).

6. The conveyor according to any one of claims 1 to 5, **characterized in that** the platen (72) of the vial holders is made up of an outer rim (72c) connected by spokes (72d) to a hub comprising an axis of rotation (72a).

7. The conveyor according to claim 1, **characterized in that** the platen (72) of the vial holders comprises an abutment ring (72e) surrounding the vertical blades (74a, 75a) of the holder, limiting the outward elastic spacing of the blades.

8. The conveyor according to any one of claims 1 to 7, **characterized in that** the bottom of the platen (72) of the vial holders also comprises a cavity delimited by an inner maintenance ring (78).

9. The conveyor according to claim 8, **characterized in that** the inner maintenance ring (78) of the vial holders is made up of independent blades (78a) vertically implanted between two spokes (72d) and tangent to the outer edge of the hub of the platen (72).

10. The conveyor according to claim 9, **characterized in that** the blades of the inner maintenance ring (78) of the vial holders are oblique and divergent and comprise an outwardly-oriented cut face in the lower portion.

11. The conveyor according to any one of claims 1 to 10, **characterized in that** the bottom of the platen of the vial holders is provided with a depth abutment ring (72g) to limit pushing in of the vials.

12. The conveyor according to any one of claims 1 to 11, **characterized in that** each holder is provided with an orienting pilot-point (73a) of the vial holders having a crescent-shaped contour built from a circular outline (T).

13. The conveyor according to claim 12, **characterized in that** each holder is provided with an orienting pilot-point (73b) of the vial holders that is manufactured as a separate piece, removable relative to the platen owing to its staple, provided with cams (73c).

14. The conveyor according to claim 12, **characterized in that** each holder is provided with an orienting pilot-point (73b) for the holders made up of a wheel freely rotating around an axis.

15. The conveyor according to any one of claims 1 to 14, **characterized in that** the part for guiding the bottle holders along the track (3) is made up of a hollow guide axis (71a) integrated into the driving roller (71), and **in that** said hollow axis (71a) receives the axis of rotation (72a) connecting the platen (72) to the driving roller (71).

16. The conveyor according to any one of claims 1 to 15, **characterized in that** it comprises a telescoping cell container (60).

## Patentansprüche

1. Förderband der Bauart, die aus einer Platte (20) besteht, die mit einer Strecke in Form einer geschlossenen Schleife (3) ausgestattet ist, entlang der Flakons (10) kontinuierlich in Haltern fortbewegt werden, die frei im Kontakt miteinander derart angeordnet sind, dass sie entlang der Strecke (3) einen durchgehenden Zug bilden, wobei jeder Halter von einer horizontalen Platte (72) gebildet wird, an der sich eine Vielzahl vertikaler Lamellen (74a, 75a) anschließt, wodurch ein Kranz gebildet wird, die imstande sind, sich elastisch im Verhältnis zur Rotationsachse der Platte abzuspreizen, wobei ihre Innenseiten dazu bestimmt sind, einen Flakon (10) durch periphere Umklammerung zu halten, **dadurch gekennzeichnet, dass** die Innen- und Außenseiten der Lamellen (74a), (75a) der Flakonhalter an ihrer Verbindung (Bezugspunkte A) mit der Platte flach sind.

2. Förderband nach Anspruch 1, **dadurch gekennzeichnet, dass** die Dicke der oberen Abschnitte (74a3) und (75a3) der Lamellen (74a) und (75a) der Flakonhalter an der Verbindung der Lamellen (74a3) (75a3) und (78a) mit der Platte (72) verjüngt ist.

3. Förderband nach Anspruch 1 oder 2, **dadurch gekennzeichnet, dass** die Außenseite der Lamellen (74a, 75a) der Flakonhalter ein Verstärkungsbein (74b, 75b) aufweist.

4. Förderband nach einem der Ansprüche 1 bis 3, wobei die Innenseite der Lamellen (75a) der Flakonhalter einen Rückhaltesporn (75a1) der Flakons aufweist, **dadurch gekennzeichnet, dass** dem Sporn eine von innen nach außen geneigte Schräge (75a2) folgt, wobei die Gesamtheit der geneigten Schrägen der Lamellen einen Trichter bilden, der das Einführen der Flakons lenkt und die Expansion der Lamellen erleichtert.

5. Förderband nach Anspruch 3 oder 4, **dadurch gekennzeichnet, dass** die Verstärkungsbeine (75b) der Lamellen (75a) des Flakonhalters im oberen Abschnitt (H) eine zylindrische Figur und im unteren Abschnitt (J) einen geraden abgestumpften umgekehrt geöffneten Kegel bilden.

6. Förderband nach einem der Ansprüche 1 bis 5, **dadurch gekennzeichnet, dass** die Platte (72) der Flakonhalter aus einer äußeren Felge (72c) besteht, die mit Radien (72d) mit einer Nabe verbunden i st, die eine Rotationsachse (72a) aufweist.

7. Förderband nach Anspruch 1, **dadurch gekennzeichnet, dass** die Platte (72) der Flakonhalter einen Anschlagkranz (72e) aufweist, der die vertikalen Lamellen (74a, 75a) des Halters umschließt, was die elastische Spreizung der Lamellen nach außen begrenzt.

8. Förderband nach einem der Ansprüche 1 bis 7, **dadurch gekennzeichnet, dass** die Unterseite der Platte (72) der Flakonhalter ferner einen Hohlraum aufweist, der von einem inneren Haltekranz (78) begrenzt wird.

9. Förderband nach Anspruch 8, **dadurch gekennzeichnet, dass** der innere Haltekranz (78) der Flakonhalter von unabhängigen Lamellen (78a) gebildet wird, die vertikal zwischen zwei Radien (72d) eingesetzt sind und am äußeren Rand der Nabe der Platte (72) anliegen.

10. Förderband nach Anspruch 9, **dadurch gekennzeichnet, dass** die Lamellen des inneren Haltekranzes (78) der Flakonhalter schräg sind und divergieren und im unteren Abschnitt eine geschnittene, nach außen zeigende Schräge aufweisen.

11. Förderband nach einem der Ansprüche 1 bis 10, **dadurch gekennzeichnet, dass** die Unterseite der Platte der Flakonhalter mit einem tiefen Anschlagkranz (72g) ausgestattet ist, um das Eindringen der Flakons zu begrenzen.

12. Förderband nach einem der Ansprüche 1 bis 11, **dadurch gekennzeichnet, dass** jeder Halter mit einem Ausrichtzapfen (73a) der Flakonhalter ausgestattet ist, der einen halbmondförmigen Umfang aufweist, der ausgehend von einer kreisförmigen Markierungsfigur (T) konstruiert ist.

13. Förderband nach Anspruch 12, **dadurch gekennzeichnet, dass** jeder Halter mit einem Ausrichtzapfen (73b) der Flakonhalter ausgestattet ist, der wie ein separates Teil hergestellt ist und im Verhältnis zur Platte dank seines Reiters, der mit Spornen (73 c) ausgestattet ist, demontierbar ist.

14. Förderband nach Anspruch 12, **dadurch gekennzeichnet, dass** jeder Halter mit einem Ausrichtzapfen (73b) der Halter ausgestattet ist, der von einem Rädchen gebildet wird, das sich frei um eine Achse dreht.

15. Förderband nach einem der Ansprüche 1 bis 14, **dadurch gekennzeichnet, dass** das Führungsteil der Flakonhalter entlang der Strecke (3) von einer hohlen Führungsachse (71a) gebildet wird, die in die Antriebsrolle (71) integriert ist, und dass die hohle Achse (71a) die Rotationsachse (72a) aufnimmt, die die Platte (72) mit der Antriebsrolle (71) verbindet.

16. Förderband nach einem der Ansprüche 1 bis 15, **dadurch gekennzeichnet, dass** es einen teleskopischen Stapelbehälter (60) aufweist.
